# EUROPEAN PATENT APPLICATION

(11) **EP 4 559 302 A2**
(43) Date of publication of application: **28.05.2025**
(21) Application number: 24200430.7
(22) Date of filing: 14.09.2024
(51) Int. Cl.: A01D 34/74

(54) **SELF-PROPELLED MOWER**

(30) Priority: 22.11.2023 CN 202311573639
(71) Applicant: Nanjing Chervon Industry Co., Ltd., Nanjing, Jiangsu 211106 (CN)
(72) Inventor: XU, Haishen, Nanjing, Jiangsu 211106, (CN); KONG, Meng, Nanjing, Jiangsu 211106, (CN)
(74) Representative: Sun, Yiming

(57) **Abstract**

Provided is a self-propelled mower. The self-propelled mower includes a chassis, a traveling wheel assembly, and a blade assembly. The traveling wheel assembly is configured to support the chassis. The blade assembly is mounted to the chassis. When the self-propelled mower is on the ground, the height of the chassis relative to the ground is adjustable, and the adjustable range is greater than or equal to 6 cm. The self-propelled mower has an adjustable height of the chassis relative to the ground, and the adjustable range is greater than or equal to 6 cm so that the adjustment range of the single mowing height of the self-propelled mower is expanded, thereby satisfying the mowing requirements of most grass plants, reducing the difficulty of the mowing operation, and improving the mowing efficiency and user experience.

## Description

### TECHNICAL FIELD

The present application relates to a garden tool and, in particular, to a self-propelled mower.

### BACKGROUND

When a mower in the related art is performing a mowing operation, due to different grass heights, to achieve a target mowing effect, the mowing height of the mower needs to be controlled. The existing mower generally adjusts the mowing height by adjusting the height of a cutting deck. However, due to the limited adjustment range of the height of the cutting deck, a single large-scale mowing operation needs to be converted into multiple small-distance cutting operations to achieve the final target mowing height, greatly increasing the difficulty of the mowing operation and reducing the mowing efficiency and user experience.

This part provides background information related to the present application, and the background information is not necessarily the existing art.

### SUMMARY

An object of the present application is to solve or at least alleviate part or all of the preceding problems. Therefore, an object of the present application is to provide a self-propelled mower, which can adjust the height of a chassis, thereby increasing the adjustment range of the mowing height and reducing the difficulty of adjusting the mowing height.

Another object of the present application is to provide a self-propelled mower system, which can adjust the height of the chassis of the self-propelled mower so that the adjustment range of the mowing height is large and the mowing height can be adjusted less difficultly.

To achieve the preceding object, the present application adopts the technical solutions below.

A self-propelled mower includes a chassis; a traveling wheel assembly configured to support the chassis; a blade assembly mounted to the chassis; and a height adjustment assembly coupled to the chassis and used for adjusting the height of the chassis relative to the ground. When the self-propelled mower is on the ground, the height of the chassis relative to the ground is adjustable, and the adjustable range is greater than or equal to 6 cm.

In some examples, the maximum height to which the chassis is adjustable relative to the ground is greater than or equal to 8 cm.

In some examples, the height adjustment assembly achieves the height adjustment of the chassis relative to the ground through manual adjustment.

In some examples, the traveling wheel assembly includes multiple traveling wheels with different wheel diameters, and the height adjustment of the chassis relative to the ground is achieved by manually replacing the multiple traveling wheels with different wheel diameters that support the chassis; or the traveling wheel assembly includes multiple nested traveling wheels with wheel diameters increasing from the inside to the outside, the ground supports a traveling wheel located on the outermost layer, and the height adjustment of the chassis relative to the ground is achieved by manually increasing or decreasing the number of the multiple traveling wheels; or the self-propelled mower further includes a connecting rod mechanism, where the connecting rod mechanism includes a first rod, a second rod, and a third rod that are rotatably connected in sequence, where the first rod and the third rod are arranged in parallel, the second rod is fixedly connected to the chassis, and the height adjustment of the chassis relative to the ground is achieved by manually rotating the first rod or the second rod.

In some examples, the height adjustment assembly achieves the height adjustment of the chassis relative to the ground through automatic adjustment.

In some examples, the traveling wheel assembly includes multiple traveling wheels with different wheel diameters, and an automatic wheel changing device replaces the multiple traveling wheels with different wheel diameters that support the chassis so that the height adjustment of the chassis relative to the ground is achieved; or the traveling wheel assembly includes multiple traveling wheels spaced apart below the chassis, a first electric lifting mechanism, a first hydraulic lifting mechanism, or a first pneumatic lifting mechanism is disposed between each traveling wheel and the chassis, and the height adjustment of the chassis relative to the ground is achieved through the first electric lifting mechanism, the first hydraulic lifting mechanism, or the first pneumatic lifting mechanism; or the self-propelled mower further includes a connecting rod mechanism, where the connecting rod mechanism includes a first rod, a second rod, and a third rod that are rotatably connected in sequence, where the first rod and the third rod are arranged in parallel, the second rod is fixedly connected to the chassis, and a rotary output device drives the first rod or the second rod to rotate so that the height adjustment of the chassis relative to the ground is achieved; or the traveling wheel assembly includes multiple traveling wheels spaced apart below the chassis, a compression spring mechanism is disposed between each traveling wheel and the chassis, and a compression device adjusts the compression amount of the compression spring mechanism so that the height adjustment of the chassis relative to the ground is achieved.

In some examples, the blade assembly includes blade and a drive shaft for driving the blade to rotate; and when the self-propelled mower is on the ground, the height of the chassis relative to the ground is adjustable, and the height of the blade relative to the chassis is adjustable.

In some examples, the adjustment range a of the height of the blade edge of the blade relative to the chassis is 3 mm to 20 mm.

In some examples, the adjustment range b of the height of the chassis relative to the ground is 7 mm to 100 mm, and the adjustment range c of the height of the blade relative to the ground is 10 mm to 120 mm.

In some examples, the height adjustment of the blade relative to the chassis is achieved through manual adjustment; where the blade assembly includes multiple drive shafts with different lengths, and the height adjustment of the blade relative to the chassis is achieved by manually replacing the multiple drive shafts with different lengths; or the blade assembly includes multiple coaxially connected drive shafts, a drive shaft located at the bottom is connected to the blade, and the height adjustment of the blade relative to the chassis is achieved by manually increasing or decreasing the number of the multiple drive shafts; or the drive shaft is a telescopic structure, and the height adjustment of the blade relative to the chassis is achieved by manually adjusting the telescopic amount of the drive shaft; or a telescopic mechanism is disposed between the drive shaft and the blade, and the height adjustment of the blade relative to the chassis is achieved by manually adjusting the telescopic amount of the telescopic mechanism.

In some examples, the height adjustment of the blade relative to the chassis is achieved through automatic adjustment; where the blade assembly includes multiple drive shafts with different lengths, and an automatic blade changing device replaces the multiple drive shafts with different lengths so that the height adjustment of the blade relative to the chassis is achieved; or the blade assembly further includes a second electric lifting mechanism, a second hydraulic lifting mechanism, or a second pneumatic lifting mechanism disposed between the drive shaft and the blade, and the height adjustment of the blade relative to the chassis is achieved through the second electric lifting mechanism, the second hydraulic lifting mechanism, or the second pneumatic lifting mechanism.

In some examples, the self-propelled mower further includes a sensor assembly, where the sensor assembly includes at least one of an infrared sensor, a pressure sensor, a laser sensor, and a camera; and a controller electrically connected to the sensor assembly and the height adjustment assembly, where the controller is configured to calculate the height of a grass plant on the ground according to the data detected by the sensor assembly and adjust the height of the chassis relative to the ground through the height adjustment assembly according to the height of the grass plant.

In some examples, the self-propelled mower is further communicatively connected to an interactive device, where the interactive device is configured to be operated by a user to send a first instruction; and a controller is electrically connected to the height adjustment assembly, where the controller is configured to adjust the height of the chassis relative to the ground through the height adjustment assembly in response to the first instruction.

In some examples, the interactive device is an external device and sends the first instruction through an APP.

In some examples, the interactive device is a gear shifter or a button disposed on the self-propelled mower.

The present application has the beneficial effects below.

The self-propelled mower provided in the present application includes the chassis, the traveling wheel assembly, and the blade assembly. The traveling wheel assembly is configured to support the chassis. The blade assembly is mounted to the chassis. When the self-propelled mower is on the ground, the height of the chassis relative to the ground is adjustable, and the adjustable range is greater than or equal to 6 cm. The self-propelled mower has an adjustable height of the chassis relative to the ground, and the adjustable range is greater than or equal to 6 cm so that the adjustment range of the single mowing height of the self-propelled mower is expanded, thereby satisfying the mowing requirements of most grass plants, reducing the difficulty of the mowing operation, and improving the mowing efficiency and user experience.

### BRIEF DESCRIPTION OF DRAWINGS

FIG. 1 is a schematic view of a self-propelled mower system according to the present application.
FIG. 2 is a schematic diagram of a first structure of a self-propelled mower according to the present application.
FIG. 3 is a schematic diagram of a second structure of a self-propelled mower according to the present application.
FIG. 4 is a schematic diagram of a second structure of a self-propelled mower according to the present application.
FIG. 5 is a schematic diagram illustrating the dimensions of a self-propelled mower according to the present application.

### DETAILED DESCRIPTION

Before any example of the present application is explained in detail, it is to be understood that the present application is not limited to its application to the structural details and the arrangement of components set forth in the following description or illustrated in the preceding drawings.

In the present application, the terms "comprising", "including", "having", or any other variation thereof are intended to cover an inclusive inclusion such that a process, method, article, or device including a series of elements includes not only those series of elements, but also other elements not expressly listed, or elements inherent in the process, method, article, or device. Without further limitations, an element defined by the phrase "comprising a..." does not exclude the presence of additional identical elements in the process, method, article, or device including this element.

In the present application, the term "and/or" is used for describing the association relationship between associated objects, which means that three types of relationships may exist. For example, A and/or B may indicate that A exists alone, A and B exist simultaneously, and B exists alone. In addition, the character "/" in the present application generally indicates the "and/or" relationship between the associated objects before and after the character "/".

In the present application, the terms "connection", "combination", "coupling", and "mounting" may be the direct connection, combination, coupling, or mounting and may also be the indirect connection, combination, coupling, or mounting. Among them, for example, direct connection means that two parts or assemblies are connected together without intermediate pieces, and indirect connection means that two parts or assemblies are separately connected to at least one intermediate piece and the two parts or assemblies are connected to each other by the at least one intermediate piece. In addition, "connection" and "coupling" are not limited to physical or mechanical connections or couplings and may include electrical connections or couplings.

In the present application, it is to be understood by those of ordinary skill in the art that a relative term (such as "about", "approximately", or "basically") used in conjunction with a quantity or a condition includes a stated value and has a meaning dictated by the context. For example, the relative term includes at least a degree of error associated with the measurement of a particular value, a tolerance caused by manufacturing, assembly, and use associated with the particular value, and the like. Such a relative term should also be considered as disclosing the range defined by the absolute values of the two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, basically parallel or basically perpendicular), "basically" may refer to that a certain degree (such as 1 degree, 5 degrees, 10 degrees, or more) is added to or subtracted from the indicated angle.

In the present application, those of ordinary skill in the art will understand that a function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", "rear", and other orientation words are described based on the orientation or positional relationship shown in the drawings and should not be understood as limitations to the examples of the present application. In addition, in this context, it also needs to be understood that when it is mentioned that an element is connected "above" or "below" another element, the element not only can be directly connected "above" or "below" the other element but also can be indirectly connected "above" or "below" the other element through an intermediate element. Further, it should be understood that orientation words such as the upper side, lower side, left side, right side, front side, and rear side not only represent perfect orientations but also may be understood as lateral orientations. For example, the lower part may include directly below, lower left, lower right, lower front, and lower back.

In the present application, the terms "controller", "processor", "central processing unit", " CPU", and " MCU" are interchangeable. When a unit such as the "controller", the "processor", the "central processing unit", the "CPU", or the "MCU" is configured to implement specific functions, these functions may be implemented by a single preceding unit or multiple preceding units unless otherwise indicated.

In the present application, the term "device", "module", or "unit" is configured to implement a specific function in the form of hardware or software.

In the present application, the terms "computing", "judging", "controlling", "determining", "identifying", and the like refer to the operations and processes of a computer system or similar electronic computing device (for example, the controller or the processor).

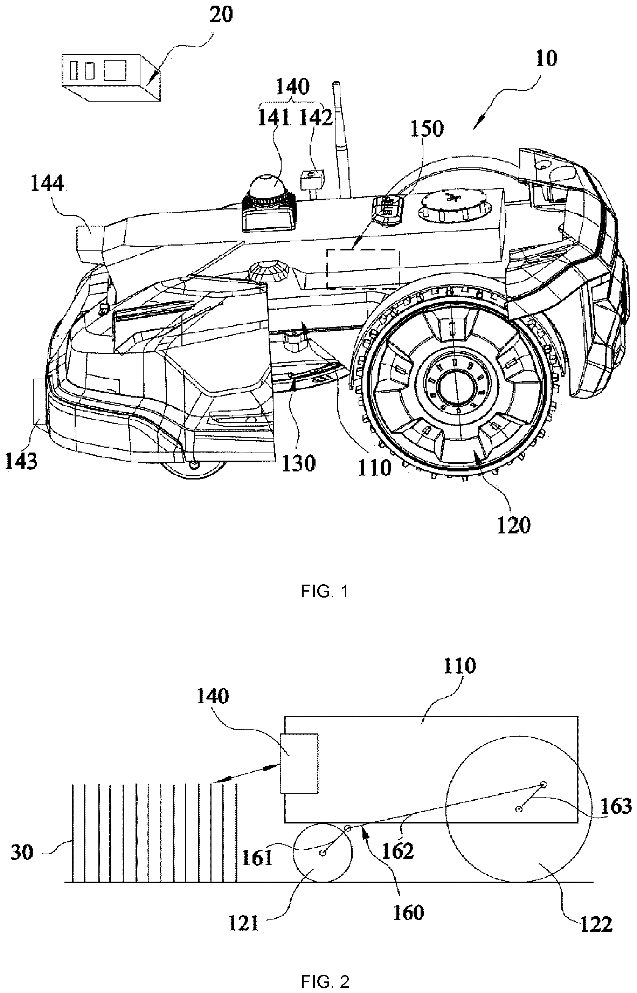

As shown in FIGS. 1 to 4, the present application provides a self-propelled mower 10 which is used for mowing grass plants 30 and can adjust the mowing height of the grass plants 30 in a wide adjustment range according to the height of the grass plants 30 and the requirements of the user so that the user can cut the grass plants 30 to the target height in one mowing operation. Specifically, the self-propelled mower 10 includes a chassis 110, a traveling wheel assembly 120, and a blade assembly 130. The chassis 110 is a tray-shaped structure capable of carrying other components. The traveling wheel assembly 120 supports the chassis 110. The traveling wheel assembly 120 includes multiple traveling wheels. The multiple traveling wheels are divided into a front traveling wheel 121 and rear traveling wheels 122 according to different setting positions. The blade assembly 130 is mounted to the chassis 110 and includes a blade 131 and a drive shaft 132 for driving the blade 131 to rotate about a straight line.

In some examples, when the self-propelled mower 10 is on the ground, the height of the chassis 110 relative to the ground is adjustable, and the adjustable range is greater than or equal to 6 cm. The self-propelled mower 10 has an adjustable height of the chassis 110 relative to the ground, and the adjustable range is greater than or equal to 6 cm so that the adjustment range of the single mowing height of the self-propelled mower 10 is expanded, thereby satisfying the mowing requirements of most grass plants 30, reducing the difficulty of the mowing operation, and improving the mowing efficiency and user experience. Of course, in other examples, when the self-propelled mower 10 is on the ground, the adjustable range of the height of the chassis 110 relative to the ground may be greater than or equal to 5 cm, 7 cm, or another value set according to requirements.

Optionally, the maximum height to which the chassis 110 is adjustable relative to the ground is greater than or equal to 8 cm. In a specific example, the height of the chassis 110 relative to the ground can be adjusted to 8 cm. In a specific example, the height of the chassis 110 relative to the ground can be adjusted to 9 cm. In a specific example, the height of the chassis 110 relative to the ground can be adjusted to 10 cm. In a specific example, the height of the chassis 110 relative to the ground can be adjusted to 11 cm.

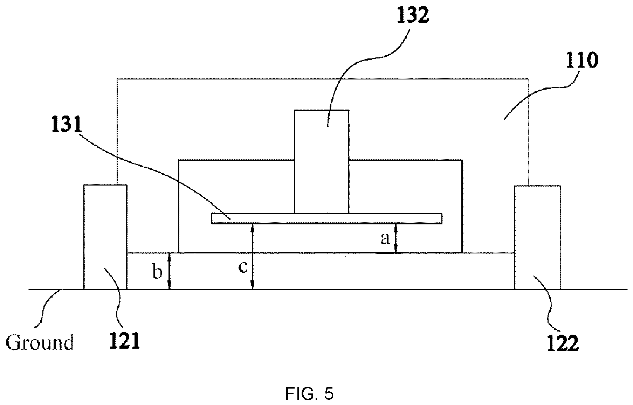

In some parallel examples, as shown in FIG. 5, the adjustment range b of the height of the chassis 110 relative to the ground is 7 mm to 100 mm. In a specific example, the height of the chassis 110 relative to the ground can be adjusted to 7 mm. In a specific example, the height of the chassis 110 relative to the ground can be adjusted to 20 mm. In a specific example, the height of the chassis 110 relative to the ground can be adjusted to 50 mm. In a specific example, the height of the chassis 110 relative to the ground can be adjusted to 70 mm. In a specific example, the height of the chassis 110 relative to the ground can be adjusted to 100 mm.

The height of the chassis 110 relative to the ground is adjustable in two manners: a manual adjustment manner and an automatic adjustment manner.

The height adjustment of the chassis 110 relative to the ground is achieved in the manual adjustment manner through the solutions below.

In some examples, the traveling wheel assembly 120 includes multiple traveling wheels with different wheel diameters, and the height adjustment of the chassis 110 relative to the ground is achieved by manually replacing the traveling wheels with different wheel diameters that support the chassis 110. Since the distance between the center of rotation of the traveling wheel and the chassis 110 remains unchanged and the ground supports the bottom end of the traveling wheel, when the wheel diameter of the traveling wheel changes, the center of rotation of the traveling wheel rises and falls accordingly, thereby changing the height of the chassis 110 relative to the ground. The manual replacement of the traveling wheel is similar to the replacement of the tire of a car, which is not described in detail here.

In some parallel examples, the traveling wheel assembly 120 includes multiple nested traveling wheels with wheel diameters increasing from the inside to the outside, the ground supports the traveling wheel on the outermost layer, and the number of the traveling wheels is manually increased or decreased so that the ground supports different traveling wheels, thereby achieving the height adjustment of the chassis 110 relative to the ground.

In some parallel examples, the traveling wheel is an elastic structure with a variable wheel diameter. For example, the traveling wheel inflates so that the traveling wheel expands, and the wheel diameter increases, and the traveling wheel exhausts air outward so that the traveling wheel shrinks, and the wheel diameter decreases.

In some parallel examples, as shown in FIG. 2, the self-propelled mower 10 further includes a connecting rod mechanism 160, the connecting rod mechanism 160 includes a first rod 161, a second rod 162, and a third rod 163 that are rotatably connected in sequence, the first rod 161 and the third rod 163 are arranged in parallel, the second rod 162 is fixedly connected to the chassis 110, and the height adjustment of the chassis 110 relative to the ground is achieved by manually rotating the first rod 161 or the second rod 162.

Optionally, an end of the first rod 161 facing away from the second rod 162 is rotatably connected to the center of rotation of the front traveling wheel 121, and an end of the third rod 163 facing away from the second rod 162 is rotatably connected to the center of rotation of the rear traveling wheel 122.

In some examples, the front traveling wheel 121 is an omni wheel, and the diameter of the front traveling wheel 121 ranges from 50 mm to 150 mm. In a specific example, the diameter of the front traveling wheel 121 is 50 mm. In a specific example, the diameter of the front traveling wheel 121 is 80 mm. In a specific example, the diameter of the front traveling wheel 121 is 100 mm. In a specific example, the diameter of the front traveling wheel 121 is 120 mm. In a specific example, the diameter of the front traveling wheel 121 is 150 mm.

In some examples, the rear traveling wheel 122 is a drive wheel, and the diameter of the rear traveling wheel 122 ranges from 100 mm to 300 mm. In a specific example, the diameter of the rear traveling wheel 122 is 100 mm. In a specific example, the diameter of the rear traveling wheel 122 is 150 mm. In a specific example, the diameter of the rear traveling wheel 122 is 200 mm. In a specific example, the diameter of the rear traveling wheel 122 is 250 mm. In a specific example, the diameter of the rear traveling wheel 122 is 300 mm.

Further, the self-propelled mower 10 further includes an operating member and a locking structure. An operator drives the operating member to rotate the first rod 161 or the second rod 162, thereby causing the second rod 162 to rise or fall. When the second rod 162 and the chassis 110 are raised or lowered to the target height relative to the ground, the locking structure can lock the first rod 161 or the second rod 162 so that the first rod 161 or the third rod 163 is maintained at the current angle of inclination. The locking structure may be the combination of a locking rod and a locking hole.

The height adjustment of the chassis 110 relative to the ground is achieved in the automatic adjustment manner through the solutions below.

In some examples, the traveling wheel assembly 120 includes multiple traveling wheels with different wheel diameters, and an automatic wheel changing device replaces the traveling wheels with different wheel diameters that support the chassis 110 so that the height adjustment of the chassis 110 relative to the ground is achieved. Since the distance between the center of rotation of the traveling wheel and the chassis 110 remains unchanged and the ground supports the bottom end of the traveling wheel, when the wheel diameter of the traveling wheel changes, the center of rotation of the traveling wheel rises and falls accordingly, thereby changing the height of the chassis 110 relative to the ground. The specific structure of the automatic wheel changing device and the method for replacing the traveling wheel are the existing art and are not described in detail here.

In some parallel examples, the traveling wheel assembly 120 includes multiple traveling wheels spaced apart below the chassis 110, a first electric lifting mechanism 180, a first hydraulic lifting mechanism, or a first pneumatic lifting mechanism is disposed between each traveling wheel and the chassis 110, and the height adjustment of the chassis 110 relative to the ground is achieved through the first electric lifting mechanism 180, the first hydraulic lifting mechanism, or the first pneumatic lifting mechanism.

Optionally, the first electric lifting mechanism 180 includes a drive motor and a transmission structure capable of converting rotational motion into linear motion, such as a rack and pinion structure or a leadscrew-nut structure. Optionally, the first hydraulic lifting mechanism is a hydraulic rod, an end of the hydraulic rod is fixed relative to the traveling wheel, and the other end of the hydraulic rod is fixed to the chassis 110. The position of the chassis 110 relative to the traveling wheel is changed by the hydraulic drive, thereby changing the height of the chassis 110 relative to the ground. Optionally, the first pneumatic lifting mechanism is a pneumatic lifting column.

In some parallel examples, as shown in FIG. 2, the self-propelled mower 10 further includes a connecting rod mechanism 160, the connecting rod mechanism 160 includes a first rod 161, a second rod 162, and a third rod 163 that are rotatably connected in sequence, the first rod 161 and the third rod 163 are arranged in parallel, the second rod 162 is fixedly connected to the chassis 110, and a rotary output device drives the first rod 161 or the second rod 162 to rotate so that the height adjustment of the chassis 110 relative to the ground is achieved.

Optionally, an end of the first rod 161 facing away from the second rod 162 is rotatably connected to the center of rotation of the front traveling wheel 121, and an end of the third rod 163 facing away from the second rod 162 is rotatably connected to the center of rotation of the rear traveling wheel 122. Optionally, the rotary output device is a drive motor, and a motor shaft of the drive motor is directly connected to the first rod 161 or the third rod 163. Driven by the drive motor, the first rod 161 or the second rod 162 is rotatable about the motor shaft.

Further, the self-propelled mower 10 further includes an operating member and a locking structure. An operator drives the operating member to rotate the first rod 161 or the second rod 162, thereby causing the second rod 162 to rise or fall. When the second rod 162 and the chassis 110 are raised or lowered to the target height relative to the ground, the locking structure can lock the first rod 161 or the second rod 162 so that the first rod 161 or the third rod 163 is maintained at the current angle of inclination. Optionally, the operating member is a rotary handle, and the locking structure is the combination of a locking rod and a locking hole.

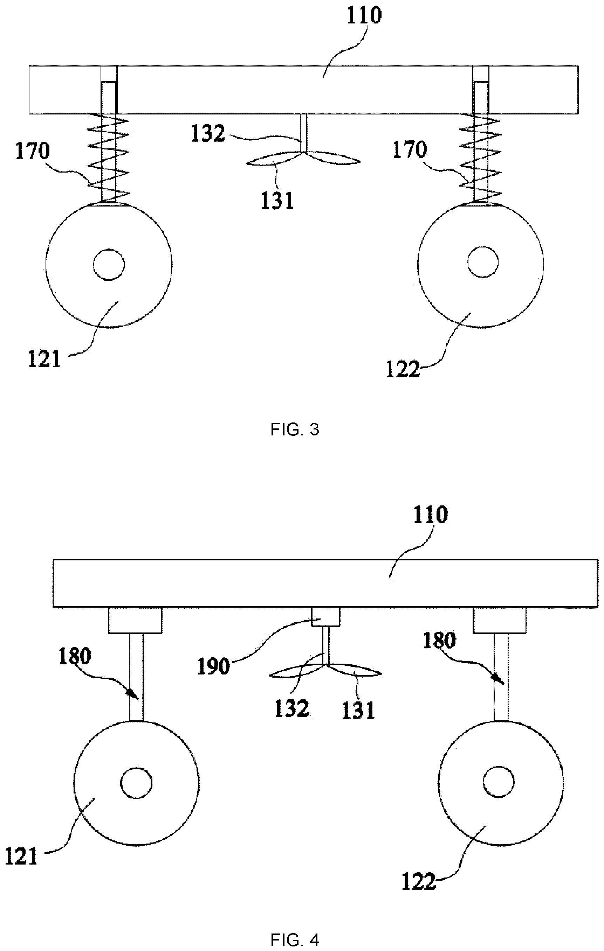

In some parallel examples, the traveling wheel assembly 120 includes multiple traveling wheels spaced apart below the chassis 110. As shown in FIG. 3, a compression spring mechanism 170 is disposed between each traveling wheel and the chassis 110, and a compression device adjusts the compression amount of the compression spring mechanism 170 so that the height adjustment of the chassis 110 relative to the ground is achieved. Optionally, the traveling wheel is provided with a guide rod extending along the vertical direction without affecting the rotation of the traveling wheel, the chassis 110 is provided with a guide hole, the guide rod is inserted into the guide hole, and the compression spring mechanism 170 is sleeved on the guide rod and elastically abuts against the chassis 110.

To further increase the adjustment range of the mowing height of the self-propelled mower 10, in some examples, when the self-propelled mower 10 is on the ground, the height of the chassis 110 relative to the ground is adjustable, and the height of the blade 131 relative to the chassis 110 is adjustable. In this manner, before the self-propelled mower 10 mows grass, the mowing height is roughly adjusted by adjusting the height of the chassis 110 relative to the ground, and then the mowing height is finely adjusted by adjusting the height of the blade 131 relative to the chassis 110, thereby improving the accuracy and adjustment efficiency of the mowing height and improving the user experience.

In some examples, as shown in FIG. 5, the adjustment range a of the height of the blade edge of the blade 131 relative to the chassis 110 is 3mm to 20 mm. In an example, the height of the blade edge of the blade 131 relative to the chassis 110 can be adjusted to 3 mm. In an example, the height of the blade edge of the blade 131 relative to the chassis 110 can be adjusted to 6 mm. In an example, the height of the blade edge of the blade 131 relative to the chassis 110 can be adjusted to 9 mm. In an example, the height of the blade edge of the blade 131 relative to the chassis 110 can be adjusted to 17 mm. In an example, the height of the blade edge of the blade 131 relative to the chassis 110 can be adjusted to 20 mm.

In some examples, as shown in FIG. 5, the adjustment range c of the height of the blade 131 relative to the ground is 10 mm to 120 mm. In an example, the height of the blade 131 relative to the ground can be adjusted to 10 mm. In an example, the height of the blade 131 relative to the ground can be adjusted to 40 mm. In an example, the height of the blade 131 relative to the ground can be adjusted to 70 mm. In an example, the height of the blade 131 relative to the ground can be adjusted to 90 mm. In an example, the height of the blade 131 relative to the ground can be adjusted to 120 mm.

The height of the blade 131 relative to the chassis 110 is adjustable in two manners: a manual adjustment manner and an automatic adjustment manner.

The height adjustment of the blade 131 relative to the chassis 110 is achieved in the manual adjustment manner through the solutions below.

In some examples, the blade assembly 130 includes multiple drive shafts 132 with different lengths, and the height adjustment of the blade 131 relative to the chassis 110 is achieved by manually replacing the drive shafts 132 with different lengths.

In some parallel examples, the blade assembly 130 includes multiple coaxially connected drive shafts 132, a drive shaft 132 located at the bottom is connected to the blade 131, and the height adjustment of the blade 131 relative to the chassis 110 is achieved by manually increasing or decreasing the number of drive shafts 132.

In some parallel examples, the drive shaft 132 is a telescopic structure, and the height adjustment of the blade 131 relative to the chassis 110 is achieved by manually adjusting the telescopic amount of the drive shaft 132.

In some parallel examples, a telescopic mechanism is disposed between the drive shaft 132 and the blade 131, and the height adjustment of the blade 131 relative to the chassis 110 is achieved by manually adjusting the telescopic amount of the telescopic mechanism. Optionally, the telescopic mechanism is a compression spring.

The height adjustment of the blade 131 relative to the chassis 110 is achieved in the automatic adjustment manner through the solutions below.

In some examples, the blade assembly 130 includes multiple drive shafts 132 with different lengths, and an automatic blade changing device replaces the drive shafts 132 with different lengths so that the height adjustment of the blade 131 relative to the chassis 110 is achieved. The specific structure of the automatic blade changing device is the existing art and is not described in detail here.

In some parallel examples, the blade assembly 130 further includes a second electric lifting mechanism 190, a second hydraulic lifting mechanism, or a second pneumatic lifting mechanism disposed between the drive shaft 132 and the blade 131, and the height adjustment of the blade 131 relative to the chassis 110 is achieved through the second electric lifting mechanism 190, the second hydraulic lifting mechanism, or the second pneumatic lifting mechanism.

Optionally, the second electric lifting mechanism 190 includes a drive motor and a transmission structure capable of converting rotational motion into linear motion, such as a rack and pinion structure or a leadscrew-nut structure. Optionally, the second hydraulic lifting mechanism is a hydraulic rod, an end of the hydraulic rod is fixed relative to the drive shaft 132, and the other end of the hydraulic rod is fixed to the blade 131. The position of the blade 131 relative to the chassis 110 is changed by the hydraulic drive, thereby changing the height of the blade 131 relative to the ground. Optionally, the second pneumatic lifting mechanism is a pneumatic lifting column.

To detect the height of the grass plant 30 to determine the adjustment values of the blade 131 and the chassis 110 in the height direction, the example of the present application further provides the self-propelled mower 10, where the self-propelled mower 10 includes the chassis 110, the traveling wheel assembly 120, the blade assembly 130, the height adjustment assembly, a sensor assembly 140, and a controller 150. The chassis 110 is a tray-shaped structure capable of carrying other components. The traveling wheel assembly 120 is configured to support the chassis 110. The traveling wheel assembly 120 includes multiple traveling wheels. The multiple traveling wheels are divided into a front traveling wheel 121 and rear traveling wheels 122 according to different setting positions. The blade assembly 130 is mounted to the chassis 110 and includes a blade 131 and a drive shaft 132 for driving the blade 131 to rotate about a straight line. The height adjustment assembly is coupled to the chassis 110 and is used for adjusting the height of the chassis 110 relative to the ground. With continued reference to FIG. 1, the sensor assembly 140 includes at least one of an infrared sensor 144, a pressure sensor 143, a laser sensor 141, and a camera 142. The controller 150 is electrically connected to the sensor assembly 140 and the height adjustment assembly. The controller 150 is configured to calculate the height of the grass plant 30 on the ground according to the data detected by the sensor assembly 140 and adjust the height of the chassis 110 relative to the ground through the height adjustment assembly according to the height of the grass plant 30.

It is to be noted that when the heights of the grass plants 30 are different, the pressure values at the feedback points when the pressure sensor 143 is in contact with the grass plants 30 are different, and the controller 150 can calculate the heights of the grass plants 30 according to the specific pressure values. The camera 142 images the grass plant 30, and the controller 150 can calculate the height of the grass plant 30 according to the image. In an example, the height of the grass plant 30 is acquired by extracting point cloud features in the image. In another example, the outline of the grass plant 30 is acquired through image recognition and panoramic segmentation algorithms based on machine learning, and then the height of the grass plant 30 is calculated according to the outline. In another example, the height of the grass plant 30 can be calculated based on the distinction between the color of the grass plant 30 and the background color. The specific calculation procedure in the controller 150 is the existing art and is not described in detail here. It is worth noting that the controller 150 can not only determine the height of the grass plant 30 at the current position, but also review whether any tall grass plants remain on the previously mowed grass surface by adjusting the angle of the camera 142, and decide whether to mow the remaining tall grass plants after the height of the chassis 110 is adjusted.

In some examples, as shown in FIG. 2, the height adjustment assembly includes the connecting rod mechanism 160 and the rotary output device, the connecting rod mechanism 160 includes the first rod 161, the second rod 162, and the third rod 163 that are rotatably connected in sequence, the first rod 161 and the third rod 163 are arranged in parallel, the second rod 162 is fixedly connected to the chassis 110, and the rotary output device drives the first rod 161 or the second rod 162 to rotate so that the height adjustment of the chassis 110 relative to the ground is achieved. Optionally, an end of the first rod 161 facing away from the second rod 162 is rotatably connected to the center of rotation of the front traveling wheel 121, and an end of the third rod 163 facing away from the second rod 162 is rotatably connected to the center of rotation of the rear traveling wheel 122. Optionally, the rotary output device is a drive motor, and a motor shaft of the drive motor is directly connected to the first rod 161 or the third rod 163. Driven by the drive motor, the first rod 161 or the second rod 162 is rotatable about the motor shaft.

In some parallel examples, the height adjustment assembly is the first electric lifting mechanism 180, the first hydraulic lifting mechanism, or the first pneumatic lifting mechanism disposed between each traveling wheel and the chassis 110, and the height adjustment of the chassis 110 relative to the ground is achieved through the first electric lifting mechanism 180, the first hydraulic lifting mechanism, or the first pneumatic lifting mechanism. The first electric lifting mechanism 180, the first hydraulic lifting mechanism, or the first pneumatic lifting mechanism is described above, and the details are not repeated here.

In some parallel examples, the traveling wheel assembly 120 includes multiple traveling wheels spaced apart below the chassis 110, the height adjustment assembly includes the compression spring mechanism 170 and the compression device, the compression spring mechanism 170 is disposed between each traveling wheel and the chassis 110, and the compression device is used for adjusting the compression amount of the compression spring mechanism 170 to achieve the height adjustment of the chassis 110 relative to the ground.

With continued reference to FIG. 1, the present application further provides a self-propelled mower system. The self-propelled mower system includes the self-propelled mower 10 and an interactive device 20. The self-propelled mower 10 includes the chassis 110, the traveling wheel assembly 120, the blade assembly 130, the height adjustment assembly, and the controller 150. The chassis 110 is a tray-shaped structure capable of carrying other components. The traveling wheel assembly 120 is configured to support the chassis 110. The traveling wheel assembly 120 includes multiple traveling wheels. The multiple traveling wheels are divided into a front traveling wheel 121 and rear traveling wheels 122 according to different setting positions. The blade assembly 130 is mounted to the chassis 110 and includes a blade 131 and a drive shaft 132 for driving the blade 131 to rotate about a straight line. The height adjustment assembly is coupled to the chassis 110 and is used for adjusting the height of the chassis 110 relative to the ground. The specific structure of the height adjustment assembly is described above, and the details are not repeated here. The controller 150 is electrically connected to the height adjustment assembly, where the controller 150 is configured to adjust the height of the chassis 110 relative to the ground through the height adjustment assembly in response to the first instruction. The interactive device 20 is communicatively connected to the self-propelled mower 10, and the interactive device 20 is configured to be operated by the user to issue the first instruction to the controller 150.

In some examples, the interactive device 20 is disposed on the self-propelled mower 10. Of course, in other examples, the interactive device 20 may be provided independently of the self-propelled mower 10.

In some examples, the interactive device 20 is an external device and sends the first instruction through an APP. In some parallel examples, the interactive device 20 is a remote controller. In some parallel examples, the interactive device 20 is a gear shifter or a button.

The controller 150 may be one single-chip microcomputer or multiple distributed single-chip microcomputers. The single-chip microcomputer can run a control program to control the traveling wheel assembly 120, the blade assembly 130, the height adjustment assembly, and the sensor assembly 140 to implement functions, respectively.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A self-propelled mower, comprising:
a chassis (110);
a traveling wheel assembly (120) configured to support the chassis (110);
a blade assembly (130) mounted to the chassis (110); and
a height adjustment assembly coupled to the chassis (110) and used for adjusting a height of the chassis (110) relative to the ground;
wherein when the self-propelled mower is on the ground, the height of the chassis (110) relative to the ground is adjustable, and an adjustable range is greater than or equal to 6 cm.

2. The self-propelled mower of claim 1, wherein a maximum height to which the chassis (110) is adjustable relative to the ground is greater than or equal to 8 cm.

3. The self-propelled mower of claim 1, wherein the height adjustment assembly achieves height adjustment of the chassis (110) relative to the ground through manual adjustment.

4. The self-propelled mower of claim 3, wherein the traveling wheel assembly (120) comprises a plurality of traveling wheels with different wheel diameters, and the height adjustment of the chassis (110) relative to the ground is achieved by manually replacing the plurality of traveling wheels with different wheel diameters that support the chassis (110); or
the traveling wheel assembly (120) comprises a plurality of nested traveling wheels with wheel diameters increasing from an inside to an outside, the ground supports a traveling wheel located on an outermost layer, and the height adjustment of the chassis (110) relative to the ground is achieved by manually increasing or decreasing a number of the plurality of traveling wheels; or
the self-propelled mower further comprises a connecting rod mechanism (160), wherein the connecting rod mechanism (160) comprises a first rod (161), a second rod (162), and a third rod (163) that are rotatably connected in sequence, wherein the first rod (161) and the third rod (163) are arranged in parallel, the second rod (162) is fixedly connected to the chassis (110), and the height adjustment of the chassis (110) relative to the ground is achieved by manually rotating the first rod (161) or the second rod (162).

5. The self-propelled mower of claim 1, wherein the height adjustment assembly achieves height adjustment of the chassis (110) relative to the ground through automatic adjustment.

6. The self-propelled mower of claim 5, wherein the traveling wheel assembly (120) comprises a plurality of traveling wheels with different wheel diameters, and an automatic wheel changing device replaces the plurality of traveling wheels with different wheel diameters that support the chassis (110) so that the height adjustment of the chassis (110) relative to the ground is achieved; or
the traveling wheel assembly (120) comprises a plurality of traveling wheels spaced apart below the chassis (110), a first electric lifting mechanism (180), a first hydraulic lifting mechanism, or a first pneumatic lifting mechanism is disposed between each traveling wheel of the plurality of traveling wheels and the chassis (110), and the height adjustment of the chassis (110) relative to the ground is achieved through the first electric lifting mechanism (180), the first hydraulic lifting mechanism, or the first pneumatic lifting mechanism; or
the self-propelled mower further comprises a connecting rod mechanism (160), wherein the connecting rod mechanism (160) comprises a first rod (161), a second rod (162), and a third rod (163) that are rotatably connected in sequence, wherein the first rod (161) and the third rod (163) are arranged in parallel, the second rod (162) is fixedly connected to the chassis (110), and a rotary output device drives the first rod (161) or the second rod (162) to rotate so that the height adjustment of the chassis (110) relative to the ground is achieved; or
the traveling wheel assembly (120) comprises a plurality of traveling wheels spaced apart below the chassis (110), a compression spring mechanism (170) is disposed between each traveling wheel of the plurality of traveling wheels and the chassis (110), and a compression device adjusts a compression amount of the compression spring mechanism (170) so that the height adjustment of the chassis (110) relative to the ground is achieved.

7. The self-propelled mower of claim 1, wherein the blade assembly (130) comprises a blade (131) and a drive shaft (132) for driving the blade (131) to rotate, and a height of the blade (131) relative to the chassis (110) is adjustable.

8. The self-propelled mower of claim 7, wherein an adjustable range a of a height of a blade edge of the blade (131) relative to the chassis (110) is 3 mm to 20 mm.

9. The self-propelled mower of claim 8, wherein an adjustment range b of the height of the chassis (110) relative to the ground is 7 mm to 100 mm, and an adjustment range c of a height of the blade (131) relative to the ground is 10 mm to 120 mm.

10. The self-propelled mower of claim 7, wherein height adjustment of the blade (131) relative to the chassis (110) is achieved through manual adjustment; wherein the blade assembly (130) comprises a plurality of drive shafts (132) with different lengths, and the height adjustment of the blade (131) relative to the chassis (110) is achieved by manually replacing the plurality of drive shafts (132) with different lengths; or
the blade assembly (130) comprises a plurality of coaxially connected drive shafts (132), a drive shaft (132) located at a bottom is connected to the blade (131), and the height adjustment of the blade (131) relative to the chassis (110) is achieved by manually increasing or decreasing a number of the plurality of drive shafts (132); or
the drive shaft (132) is a telescopic structure, and the height adjustment of the blade (131) relative to the chassis (110) is achieved by manually adjusting a telescopic amount of the drive shaft (132); or
a telescopic mechanism is disposed between the drive shaft (132) and the blade (131), and the height adjustment of the blade (131) relative to the chassis (110) is achieved by manually adjusting a telescopic amount of the telescopic mechanism.

11. The self-propelled mower of claim 7, wherein height adjustment of the blade (131) relative to the chassis (110) is achieved through automatic adjustment; wherein the blade assembly (130) comprises a plurality of drive shafts (132) with different lengths, and an automatic blade changing device replaces the plurality of drive shafts (132) with different lengths so that the height adjustment of the blade (131) relative to the chassis (110) is achieved; or
the blade assembly (130) further comprises a second electric lifting mechanism (190), a second hydraulic lifting mechanism, or a second pneumatic lifting mechanism disposed between the drive shaft (132) and the blade (131), and the height adjustment of the blade (131) relative to the chassis (110) is achieved through the second electric lifting mechanism (190), the second hydraulic lifting mechanism, or the second pneumatic lifting mechanism.

12. The self-propelled mower of claim 5, further comprising a sensor assembly (140), wherein the sensor assembly (140) comprises at least one of an infrared sensor (144), a pressure sensor (143), a laser sensor (141), and a camera (142); and
a controller (150) electrically connected to the sensor assembly (140) and the height adjustment assembly, wherein the controller (150) is configured to calculate a height of a grass plant (30) on the ground according to data detected by the sensor assembly (140) and adjust the height of the chassis (110) relative to the ground through the height adjustment assembly according to the height of the grass plant (30).

13. The self-propelled mower of claim 5, wherein the self-propelled mower is further communicatively connected to an interactive device (20), wherein the interactive device (20) is configured to be operated by a user to send a first instruction; and
a controller (150) is electrically connected to the height adjustment assembly, wherein the controller (150) is configured to adjust the height of the chassis (110) relative to the ground through the height adjustment assembly in response to the first instruction.

14. The self-propelled mower of claim 13, wherein the interactive device (20) is an external device and sends the first instruction through an APP.

15. The self-propelled mower of claim 13, wherein the interactive device (20) is a gear shifter or a button disposed on the self-propelled mower.
